(19) Europäisches Patentamt
European Patent Office
Office européen des brevets

(11) **EP 1 411 625 B1**

(12) **FASCICULE DE BREVET EUROPEEN**

(45) Date de publication et mention
de la délivrance du brevet:
**23.04.2008 Bulletin 2008/17**

(51) Int Cl.:
***H02N 2/10*** *(2006.01)* *H01L 41/09* *(2006.01)*

(21) Numéro de dépôt: **03292264.3**

(22) Date de dépôt: **15.09.2003**

(54) **Perfectionnements aux moteurs hautes puissances**

Verbesserungen an Hochleistungsmotoren

Improvements of high power motors

(84) Etats contractants désignés:
**DE ES GB IT**

(30) Priorité: **20.09.2002 FR 0211635**

(43) Date de publication de la demande:
**21.04.2004 Bulletin 2004/17**

(73) Titulaire: **SAGEM Défense Sécurité**
**75015 Paris (FR)**

(72) Inventeurs:
• **Woydt, Mathias**
**12203 Berlin (DE)**
• **Audren, Jean-Thierry**
**78470 Saint-Rémy-Lès-Chevreuse (FR)**
• **Hodar, François**
**91400 Orsay (FR)**

(74) Mandataire: **Callon de Lamarck, Jean-Robert et al**
**Cabinet Régimbeau**
**20, rue de Chazelles**
**75847 Paris cedex 17 (FR)**

(56) Documents cités:
FR-A- 2 806 225 US-A- 5 329 201
US-A- 6 107 724 US-A- 2004 256 037

• **PATENT ABSTRACTS OF JAPAN vol. 014, no. 200 (E-0920), 24 avril 1990 (1990-04-24) -& JP 02 041669 A (CANON INC), 9 février 1990 (1990-02-09)**

• **PATENT ABSTRACTS OF JAPAN vol. 016, no. 210 (E-1203), 19 mai 1992 (1992-05-19) -& JP 04 033578 A (FUKOKU CO LTD; MITSUBISHI STEEL MFG CO LTD), 4 février 1992 (1992-02-04)**

• **"Metals & Alloys in the UNIFIED NUMBERING SYSEM" 1996, SOCIETY OF AUTOMOTIVE ENGINEERS, INC , 400 COMMONWEALTH DRIVE, WARRENDALE, US**

• **DENIS J.; BRIANT J.; HIPEAUX J.-C.: 'PHYSICO-CHIMIE DES LUBRIFIANTS analyses et essais', EDITIONS TECHNIP, 27 RUE GINOUX 75737 PARIS CEDEX, FRANCE**

• **[Online] Yutani K. et al.: Calorimetric study of tryptophan synthase alpha-subunit and two mutant proteins; Extrait de l'Internet: URL:http://www.ncbi.nlm.nih.gov/sites/entr ez?cmd-Retrieve=&db-PubMed=&list_uids-6816 746=&dopt=Abstract> Yutani K. et al.: Calorimetric study of tryptophan synthase alpha-subunit and two mutant proteins**

• **CHAVANES A.; PAUTY E.: 'Fuel Pump and Injector Components Made from Wear Resistant Cements' SAE TECHNICAL PAPERS, DOCUMENT NUMBER: 2002-01-0610 - INCLUDED IN: "POWDER METAL APPLICATIONS AND COMPONENTS", ISBN NUMBER: 0-7680-0949-9, DATE PUBLISHED: MARCH 2002, SOCIETY OF AUTOMOTIVE ENGINEERS, INC.**

Remarques:
Le dossier contient des informations techniques présentées postérieurement au dépôt de la demande et ne figurant pas dans le présent fascicule.

EP 1 411 625 B1

**Description**

DOMAINE TECHNIQUE GENERAL.

La présente invention concerne l'application de matériaux de friction dans des moteurs hautes puissances ou à vibrations.

Plus précisément, elle concerne l'application de matériaux de friction dans des moteurs hautes puissances ou à vibrations, ces matériaux de friction étant à l'interface entre deux corps, le premier corps (patin) étant mis en contact en frottement à sec avec le deuxième corps (rotor).

ETAT DE LA TECHNIQUE.

Certains moteurs hautes puissances utilisent dans leur fonctionnement les propriétés d'élongation de matériaux actifs.

Ces matériaux peuvent par exemple être des matériaux du type piézo-électrique, du type magnéto-strictif, électro-strictif, etc.

FR 2 806 225 divulgue un système selon le préambule de la revendication 1.

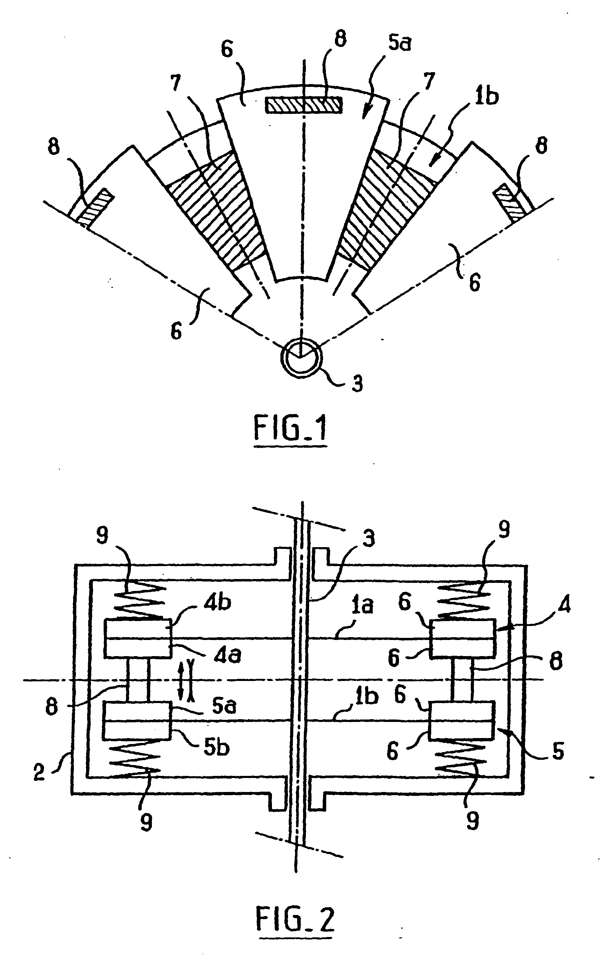

Les figures 1 et 2 représentent schématiquement un moteur 2 haute puissance comportant des blocs 4a, 4b, 5a, 5b de forme sensiblement circulaire, et deux rotors 1a et 1b, l'un étant interposé entre les blocs 4a et 4b, et l'autre entre les blocs 5a et 5b.

Les rotors 1 a et 1 b sont montés sur un arbre commun 3.

Les blocs 4a, 4b, 5a, 5b comportent des pétales 6 aptes à être mis en contact avec les rotors 1a et 1b.

Les blocs 4a, 4b, 5a, 5b comportent des éléments en matériaux actifs 7 interposés entre les pétales 6, et qui subissent des élongations dans le plan des blocs, afin de mettre en mouvement les pétales 6.

Les blocs les plus internes 4a et 5a sont reliés entre eux, par l'intermédiaire des pétales 6, par des éléments 8 en matériaux actifs. Ces éléments sont aptes à se déformer et déplacer les pétales 6 selon le sens des flèches visibles sur la figure 2.

Les blocs les plus externes 4b et 5b sont reliés au carter du moteur 2, par l'intermédiaire des pétales 6, par des éléments 9 formant ressorts.

Les élongations synchronisées des éléments 7 et 8 permettent de mettre en rotation les rotors 1a et 1b, notamment par la présence de frottement entre les pétales 6 et les rotors 1a et 1b.

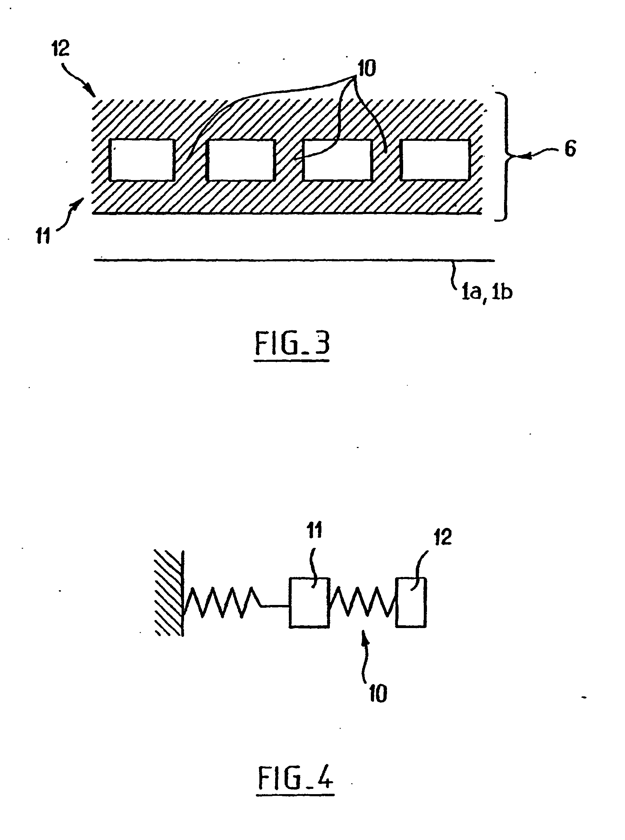

La figure 3 montre schématiquement que les pétales 6 comportent une partie principale 12, relié à un patin de contact 11 par des éléments intermédiaires 10 présentant des propriétés élastiques.

Le fait que la partie principale ne soit pas directement en contact avec les rotors 1a et 1b, et qu'une partie intermédiaire 10 présente des propriétés de déformation élastique permet d'augmenter le rendement du moteur à vibrations. En effet, l'ensemble 12, 10, 11 forme un ensemble double masse-ressort représenté à la figure 4.

Si les patins de contact 11 sont dimensionnés correctement, le rendement du moteur à vibrations est grandement augmenté. Dans la suite de la présente description, on appellera également masselotte les patins de contact.

Ainsi, la masselotte, qui a une masse limitée et fixe pour les raisons susmentionnées, comporte à sa surface une couche frottante, en contact avec un rotor. L'épaisseur de la masselotte est de l'ordre de 2 mm. En variante, la masselotte peut frotter directement sans la présence d'une couche frottante.

Généralement, la couche intermédiaire 10 comporte en général une conductivité thermique $\lambda$ faible ($\lambda < 0{,}5$ W/mK).

Les moteurs à vibrations représentent un attrait pour les actionneurs intermittents, comme par exemple les systèmes de trains d'atterrissage, de porte cargos, de gouvernails et de volets. Ils sont alors utilisés en remplacement des circuits hydrauliques ou pneumatiques, qui exigent des liquides ayant des points d'écoulement inférieurs à -60°C.

Ces liquides présentent des risques d'inflammation, et doivent être vidangés et mis en décharge régulièrement.

Ces moteurs à vibrations sont également utilisés en remplacement des moteurs électriques comportant des réducteurs de vitesse à engrenages.

Les systèmes comportant des actionneurs intermittents ont besoin d'un fort couple à basse vitesse.

On trouve dans la littérature scientifique et technique une multitude de combinaisons possibles pour les couples de friction possibles dans les systèmes comprenant des plaquettes, des rotors, des tambours, des plateaux de pression d'embrayage et des garnitures d'embrayage. Ces couples permettent d'obtenir le couple fort avec une vitesse réduite.

Cependant, lesdits couples possèdent généralement entre 10 à 30 composants et ont tous les inconvénients suivants :

- ils perdent du coefficient de frottement avec la température croissante,
- ils perdent du coefficient de frottement avec la vitesse croissante,

- ils perdent de la résistance à l'usure avec la température croissante,
- ils perdent de la résistance à l'usure avec la vitesse croissante,

Ils peuvent également comporter les autres inconvénients suivants :

- ils ont une charge limite pour une usure douce limitée à 2-3 MPa,
- ils ont des propriétés tribologiques sensibles à l'humidité,
- ils ont un coefficient de frottement (COF) ou d'usure variant différemment et de façon imprévisible en fonction de la vitesse, de la température et de la pression géométrique, et
- ils ont un coefficient d'usure ($K_v$) supérieur à $10^{-5}$ mm$^3$/Nm.

Les conséquences principales d'une garniture composée de 10 à 30 substances et/ou phases sont les suivantes.

Elle a une fluctuation de durabilité entre les lots, et elle a une fluctuation des propriétés tribologiques entre les lots.

Cela est principalement dû au fait que la composition et la structure cristallographique de certaines substances sont difficiles à définir en production.

Par conséquent, les fluctuations des propriétés tribologiques obligent le constructeur à prendre des mesures drastiques pour garantir le fonctionnement dans le spectre de sollicitation des pièces utilisant les matériaux de friction décrits par l'état de l'art.

On rappelle que le coefficient d'usure est utilisé internationalement en Tribologie pour qualifier le comportement à l'usure. Il est défini par le volume d'usure divisé par la charge normale et la distance de glissement reliée au volume d'usure.

La demande FR 2 819 650, propose des couples de friction dans des actionneurs linéaires dont la structure et l'application sont très différentes de celles des moteurs hautes puissances. Les couples de friction de la demande FR 2 819 650 ont des propriétés stables en fonction des conditions de fonctionnement. Lesdits couples de friction sont sollicités sans glissement. En effet, ils sont utilisés dans des systèmes de blocage dont le but est d'éviter le glissement du micro-contact. Ils ne possèdent pas de propriétés de dissipation calorifique importantes, puisqu'ils n'ont pas à dissiper les quantités de chaleur importantes induites par des phases de glissement.

Par ailleurs, la durée de fonctionnement accumulée d'un avion civil est de l'ordre de 48.000 heures de vol. Pour les matériaux de friction de la masselotte et du rotor d'un moteur haute puissance, cela représente des sollicitations avec vie accumulée de 2.000 heures. Il faut donc des taux d'usure $k_v$ inférieurs à $3 \times 10^{-8}$ mm$^3$/Nm. Ces taux d'usure doivent être indépendants de la température et des conditions d'utilisation, ainsi qu'indépendants de la vitesse de glissement.

De la même façon, pour des applications dans des véhicules industriels, même si les heures d'opérations sont généralement limitées à 20.000 heures, la vie accumulée se situe également autour de 2.000 heures.

On l'aura compris, le cahier des charges d'un moteur haute puissance mentionnent donc des faibles taux d'usure et de forts coefficients de frottement. De plus, les matériaux de friction doivent présenter des propriétés calorifiques, et notamment de diffusivité thermique $\kappa$ [en mm$^2$/s] importantes pour les matériaux surtout du rotor.

En effet, la température de Curie limite l'effet actif, notamment piézo-électrique. Ainsi, si la température s'élève de façon trop importante dans le moteur haute puissance, son fonctionnement est altéré.

La contrainte de ne pas atteindre la température de Curie limite la température d'échauffement de la masselotte à environ 150°C et celle du rotor à 200°C. La température plus importante tolérable par le rotor est due au fait qu'il n'est pas relié à des éléments sensibles à la température, notamment des matériaux piézo-électriques, et qu'il est relié à un axe qui constitue un moyen de dissiper la chaleur plus rapidement.

Les couples de l'état de la technique ne permettent pas de résoudre de telles contraintes thermiques, notamment celles de diffusivité thermique.

PRESENTATION DE L'INVENTION.

L'invention propose de pallier ces inconvénients.

Notamment l'invention propose des couples de matériaux et couches frictionnelles qui répondent en même temps à plusieurs contraintes. Les matériaux des couches frictionnelles doivent présenter :

- de bonnes propriétés de frottement et des faibles taux d'usure ;
- de bonnes propriétés calorifiques ;
- une bonne répartition du flux de chaleur ;
- de bonnes propriétés mécaniques, notamment une bonne résistance à la fatigue ; et
- de bonnes propriétés anti-corrosion.

**EP 1 411 625 B1**

A cet effet, l'invention propose un système, notamment adapté pour les moteurs hautes puissances, comportant au moins un rotor et des moyens comportant des éléments actifs aptes à mettre en rotation le/les rotor(s) par leur déformation synchronisée, lesdits moyens de mise en rotation du/des rotor(s) comportant au moins un pétale comportant une masselotte, caractérisé en ce que le matériau de chaque masselotte est tel qu'elle présente une capacité thermique massique (Cp$^{22C}$) supérieure à 0,35 [J/g/K], et/ou le matériau de chaque rotor est tel qu'il présente une capacité calorifique supérieure à 2 [J/cm$^3$/K].

L'invention est avantageusement complétée par les caractéristiques suivantes, prises seules ou en une quelconque de leur combinaison techniquement possible :

- chaque masselotte présente une capacité thermique massique supérieure à 0.5 [J/g/K] ;
- la capacité calorifique de chaque rotor est supérieure à 2.5 [J/cm$^3$/K] ;
- le matériau de chaque masselotte et de chaque rotor, ce matériau étant non revêtu, comporte du :

  - (Ti,Mo)(C,N) + 8-20 % liant Ni/Mo (nuances TM 8,10,20) ; et/ou
  - WC-6Ni ; et/ou
  - de l'alumine renforcée par de la zircone (ZTA, ZTPA); et/ou
  - AIN ; et/ou
  - carbure de silicium infiltré au silicium SiSiC, avec 8-20% en poids de silicium.

- le matériau de chaque masselotte comporte du :

  - MgO-ZrO$_2$ ; et/ou
  - du nitrure l'aluminium par frittage à chaud HIP-AIN; et/ou
  - du nitrure l'aluminium par frittage sous pression GPS-AIN; et/ou-
  - de l'alumine renforcée par de la zircone (ZTA, ZTPA); et/ou
  - une phase Magnéli (Ti$_n$O$_{2n-1}$, 4≤n≤10 avec n entier, ou des mélanges du type 40%Ti$_4$O$_7$/60%Ti$_5$O$_9$);

- le matériau de chaque masselotte et de chaque rotor est revêtu en projection thermique par un matériau qui comporte du/des :

  - phases Magnéli (Ti$_n$O$_{2n-1}$, 4≤n≤10 avec n entier, ou des mélanges du type 40%Ti$_4$O$_7$/60%Ti$_5$O$_9$) ; et/ou

  - WC-17%Co; et/ou

  - (Ti,Mo)(C,N) ou (Ti,W)(C,N) + un liant Ni/Mo ; et/ou

  - >75Cr$_3$C$_2$/<25NiCr ; et/ou

  - 4-6Al$_2$O$_3$/6-4TiO$_2$; et/ou

- le matériau de chaque masselotte et de chaque rotor comporte du/des :

  - Fontes grises globulaires et/ou des fontes grises lamellaires et/ou avec une trempe bainitique et/ou alliées par Cr, Mo, Al, V, Ti ; et/ou

  - Aciers (Z6CND16-05-01) ; et/ou

  - Aciers X5CrNiCu15-5 ; et/ou

  - Alliages AlSi + SiC/Al$_2$O$_3$ ; et/ou

  - Alliages AlSi + dispersoïdes Al$_4$C$_3$/Al$_2$O$_3$/TiB$_2$; et/ou

  - Alliages Al-Fe-V ; et/ou

  - Aluminiums série 6xxx en T6 et supérieure et série 7xxx ; et/ou

  - du carbure de silicium infiltré au silicium SiSiC ; et/ou

- Alliages de titanium, UNS R5xxxx, tels que TiAl6V4.

- les couches dures déposées par projection thermique doivent être usinées vers des rugosités finales de $R_a$ (rugosité arithmétique) inférieures à 0,04 μm, l'épaisseur des couches usinées étant supérieures à 50 μm ;et

- les valeurs des rugosités $R_{pK}$ et $R_{vK}$ de la norme DIN EN ISO 13565-2:1998 sont inférieures à 0,030 μm et 0,070 μm respectivement.

PRESENTATION DES FIGURES.

D'autres caractéristiques, buts et avantages de l'invention ressortiront de la description qui suit qui est purement illustrative et non limitative et qui doit être lue en regard des figures annexées sur lesquelles

- la figure 1, déjà commentée, représente schématiquement une vue en élévation d'un moteur haute puissance ;
- la figure 2, déjà commentée, représente schématiquement une vue de profil d'un moteur haute puissance ;
- la figure 3, déjà commentée, représente schématiquement une vue en coupe d'un pétale d'un moteur à vibrations ; et
- la figure 4, déjà commentée, représente schématiquement le système masses ressorts constitué par le pétale de la figure 3.

DESCRIPTION DETAILLEE DE L'INVENTION.

CREATION ET ABSORPTION DE LA CHALEUR.

La création de chaleur est très importante dans un moteur haute puissance, à cause du frottement à sec entre ses éléments constitutifs. Par exemple, un moteur haute puissance d'une puissance mécanique de 5 kW produit une perte frictionnelle d'environ 4,5 kW. Puisque le moteur n'est pas lubrifié, toutes les pertes frictionnelles sont transformées en chaleur. La chaleur produite doit être emmagasinée par les matériaux en contact.
De plus, les moteurs possèdent généralement une limitation de leur rapport puissance sur masse. Ce rapport est généralement égal à 1 kW par kg. Ainsi, le moteur ne possède pas beaucoup de masse pour pouvoir absorber la chaleur frictionnelle produite.

REPARTITION DE LA CHALEUR.

L'invention vise à améliorer la répartition de la chaleur entre les différents éléments du moteur haute puissance.
On rappelle que la diffusivité thermique $\kappa$ [en mm$^2$/s] est la grandeur déterminante dans cette répartition.
La chaleur générée pendant l'actionnement du moteur se partage entre les surfaces du triboélément « masselotte-rotor ».
On rappelle que le volume du rotor est fixe par conception. Par contre, seule la masse de la masselotte est fixée par conception, par exemple à 10 grammes chacune pour une puissance de 5 kW en sortie du moteur.
Ainsi, une chaleur de 220.000 Joules est par exemple générée avec une perte frictionnelle de 4,5 kW pendant un temps d'actionnement inférieur à 50 secondes. On peut également obtenir une valeur de la chaleur identique pour une séquence de plusieurs actionnements de quelques secondes.
La répartition de chaleur entre les différentes surfaces du triboélément dépend d'abord du rapport des deux surfaces en contact.
Le rapport des surfaces frottantes entre par exemple une structure comportant 32 masselottes (17176 mm$^2$) et par exemple les deux cotés de deux rotors (50990 mm$^2$) d'un moteur haute puissance est environ 1:2,96.
Pour calculer la répartition du flux de chaleur q de frottement générée dans le tribocontact des deux corps glissants, on peut appliquer la formule (1) suivante, parce que les deux surfaces ne diffèrent pas trop l'une par rapport à l'autre :

$$\frac{q_{1masselotte}}{q_{2rotors}} = \frac{\sqrt{\rho_1 \; \lambda_1 \; C_{p1}}}{\sqrt{\rho_2 \; \lambda_2 \; C_{p2}}} \qquad\qquad (1)$$

où $\rho$ représente la densité du matériau considéré, $\lambda$ la conductivité thermique et $C_p$ la capacité thermique massique.
Cette formule (1) est valable pour deux triboéléments ayant sensiblement la même surface en contact et ayant les flux de chaleur q tels que

$$q_{rotor} + q_{masselotte} = 1.$$

La formule (1) montre que la répartition de la chaleur dépend en priorité des propriétés calorifiques des matériaux, tels que la conductivité, la capacité thermique massique et la densité volumique des matériaux de frottement. On rappelle de plus que ces propriétés dépendent de la température.

DISSIPATION DE LA CHALEUR.

Après que les pertes frictionnelles ont été reparties entre les éléments du moteur haute puissance, leurs dissipations deviennent importantes.

Par exemple, pour dissiper 220 000 Joules entre les rotors et les masselottes d'un moteur, on peut choisir pour l'ensemble des masselottes des aciers inoxydables tels que

- X5CrNiCu15-5;

- X5CrNiCuNb 17-4-4 ; DIN EN 1.4521/1.4548 ; ou DIN EN 1.4542 ;

- X5 CrNiCuNb 16-4,

- Z7 CNU 15-05 ou Z7 CNU 17-04,

qui donnent une capacité calorifique de 20.640 Joules de l'ensemble des masselottes en acier.

On rappelle qu'une grande quantité de chaleur est créée à l'interface entre la masselotte et le disque.

Chaque masselotte est proche de matériaux actifs, et/ou d'une colle par exemple, sensibles à la chaleur. Par exemple la colle sera du type polyimide dont la température de transition vitreuse est de l'ordre de 150°C. Ainsi, pour la masselotte, on souhaite un matériau qui possède à la fois une faible conductivité thermique et une grande chaleur massique.

La faible conductivité thermique permet d'attirer vers la masselotte un minimum de la chaleur produite à l'interface.

La grande chaleur massique permet d'emmagasiner un maximum de chaleur qui aurait quand même été transmise à la masselotte.

Par contre, le disque n'est pas relié à des éléments sensibles à la chaleur. Par conséquent, pour le disque, on souhaite un matériau qui possède à la fois une grande conductivité thermique et une grande chaleur massique.

La grande conductivité thermique permet d'attirer vers le disque un maximum de la chaleur produite à l'interface.

La grande chaleur massique permet d'emmagasiner au maximum cette chaleur transmise au disque.

Si les matériaux des masselottes possèdent les propriétés susmentionnées, alors il est possible de limiter leur température à celle que l'on s'est fixée, à savoir 150°C.

Dans l'exemple que nous considérons, la chaleur à répartir et à dissiper est égale à 220 kJ. Le tableau 1 de la page suivante montre les capacités calorifiques des matériaux.

Pour que la température des masselottes reste inférieure à 150°C, il faut que le rapport chaleur totale sur chaleur emmagasinée par les 32 masselottes soit supérieur à 1 :10. C'est le cas de l'acier Z6CND16-05-01.

On remarque que le rapport pour le carbure de silicium infiltré au silicium SiSiC ou Silicon Infiltrated Silicon Carbide selon la terminologie anglo-saxonne utilisée par l'homme du métier, est de l'ordre de 1 :4. Cependant, la conductivité de ce matériau est trop importante pour qu'il soit utilisé pour les masselottes.

Il est de préférence utilisé pour le rotor, avec un revêtement triboactif.

Le tableau 1 résume l'ensemble des matériaux possibles pour les masselottes, ainsi que leurs propriétés calorifiques.

Tableau 1

| Matériaux pour masselotte | Accumulation calorique pour 10 grammes et $\Delta T$= 150K [J] | Accumulation calorique pour l'ensemble des 32 masselottes [J] |
|---|---|---|
| WC-6Ni | 375 | 12.000 |
| Z6CND16-05-01 | 645 | 20.640 |
| (Ti,Mo)(C,N) (TM10) | 750 | 24.000 |

(suite)

| Matériaux pour masselotte | Accumulation calorique pour 10 grammes et $\Delta T$= 150K [J] | Accumulation calorique pour l'ensemble des 32 masselottes [J] |
|---|---|---|
| Fonte grise globulaire | 930 | 29.760 |
| MgO-ZrO$_2$ | 1.020 | 32.640 |
| Ti$_n$O$_{2n-1}$ avec n entier | 1.200 | 38.400 |
| Si$_3$N$_4$ | 1.200 | 38.400 |
| Aluminium | 1.320 | 42.240 |
| Zirconia Toughened Alumina (ZTA) | 1.330 | 42.560 |
| AlSi + SiC/Al$_2$O$_3$ | 1.350 | 43.200 |
| SiSiC | 1.650 | 52.800 |

On note dans ce tableau la présence de l'alumine renforcée par de la zircone ou alumine-zircone ou ZTA (Zirconia Toughened Alumina) selon la terminologie anglo-saxonne utilisée par l'homme du métier.

On peut alors choisir le matériau du rotor. Cependant, ce matériau doit être choisi pour qu'il ait des capacités calorifiques complémentaires de celles des masselottes.

La chaleur accumulée, soit entre 20.640 Joules et 52.800 Joules (visibles dans le tableau I) de l'ensemble des masselottes ne doit pas être surpassée par un manque de capacité calorifique du rotor. La chaleur dissipée dans l'ensemble des masselottes ne doit pas excéder leurs capacité calorifique, de sorte que l'équation (2) soit remplie.

$$Q_{masselottes} \geq Q_{frictionnel}\left(\frac{q_{masselottes}}{q_{disques} + q_{masselottes}}\right) \qquad (2)$$

où $Q_{frictionnel}$ est la chaleur générée par frottement et $Q_{masselottes}$ est la capacité calorifique de l'ensemble des masselottes.

Le tableau 2 ci-après donne des exemples de matériaux possibles pour le ou les rotors, et présente leurs propriétés physico-chimiques.

Tableau 2

| Matériaux | Densité [g/cm$^3$] | Conductivité thermique [W/mK] | Capacité calorifique [kJ/kg] (kJ/dm$^3$) | Capacité calorifique 2 rotors [kJ] | Opération maximale [°C] | Capacité thermique massique [J/g/K] |
|---|---|---|---|---|---|---|
| C$_{fibre}$-C$_{matrice}$ | 1,8 | 8-20 | 124 (220) | 56,2 | 1400 | 0,62 (1,8 à 1400°C) |
| TiAl6V4 | 4,6 | 6,7 | 105 (483) | 120,1 | 1000 | 0,523 |
| Aluminium 6xxx | 2,7 | 189 | 178 (480) | 121,0 | 300 | 0,89 |
| AlN | 3,3 | >170 | 160 (521) | 133,0 | 1450 | 0,8 |
| AlSi + SiC/Al$_2$O$_3$ | 2,9 | 120-140 (Al$_2$O$_3$) -180 (SiC) | 180 (520) | 131,3 | 400 | 0,9 |
| Si$_3$N$_4$ | 3,2 | $\rightarrow$ >100 | 160 (528) | 128,9 | 1300 | 0,8 |
| (Ti,Mo)(C,N) | 6,5 | 60 | 92 (560) | 150,1 | >1000 | 0,46 (0,56 à 200°C) |
| Z6CND16-05-01 | 7,7 | 15 | 86 (650) | 166,3 | 600 | 0,43 |
| SiSiC | 3,1 | >120 | 220(680) | 171,4 | 1400 | 1,1 (1,4 à 1000°C) |

(suite)

| Matériaux | Densité [g/cm$^3$] | Conductivité thermique [W/mK] | Capacité calorifique [kJ/kg] (kJ/dm$^3$) | Capacité calorifique 2 rotors [kJ] | Opération maximale [°C] | Capacité thermique massique [J/g/K] |
|---|---|---|---|---|---|---|
| WC-6Ni | 14,9 | 80 | 50 (745) | 187,4 | 1000 | 0,25 (0,35 à 200°C) |
| Fontes grises Fontes grises | 7,2 | 50 (FGL) 38 (FGS) | 100 (810) 124(970) | 188,6 (223,9) | 700 | 0,52 (FGL) 0,62 (FGS) |
| MgO-ZrO$_2$ | 5,7 | 2 | 136 (775) | 196,4 | 1000 | 0,6-0,7 |
| Ti$_n$O$_{2n-1}$ | 5,2 | -5 | 160 (920) | 221,1 | 700 (1400) | 0,8 |

Tous les matériaux et les valeurs des capacités calorifiques présentés dans le Tableau 2 le sont pour des rotors de diamètre de 179 mm x 5 mm et pour ΔT=200 K.

On notera que l'abréviation FGL fait référence à des fontes grises lamellaires, tandis que l'abréviation FGS fait référence à des fontes grises sphéroïdales.

Pour le rotor, la situation est inverse de celle de la masselotte. Chaque masselotte a une masse définie (10 grammes avec ± 10% par exemple). Par contre, seul le volume du rotor est défini par conception.

Il a des dimensions telles que son diamètre est par exemple 179 mm et son épaisseur est 5 mm. Il a donc un volume de 125.8 cm$^3$ environ. Son épaisseur peut cependant varier entre 4 et 7 mm environ.

La connaissance de la variation de la température AT permet d'obtenir la valeur absolue de la quantité de chaleur absorbée [kJ/dm$^3$] par un matériau.

Le tableau 2 donne une étendue de 220 à 970 kJ/dm$^3$.

Cette quantité ou capacité d'accumulation de chaleur doit être considérée comme une valeur volumétrique, parce que la place disponible pour un rotor est indépendante du matériau, et que les densités varient très fort d'un matériau à l'autre.

MICROCONTACT « COLLAGE » (OU « STICK ») ET « GLISSEMENT » (OU « SLIP »).

Le contact du tribosystème du moteur haute puissance effectue un mouvement rotatif elliptique, avec une évolution de pression et de vitesse de glissement.

Le mouvement se décompose en deux phases.

Une phase « aller », avec glissement et pseudo-collage. Durant cette phase, la pression atteint son maximum (12 MPa pour un COF de 0,2) à une vitesse relativement faible (0.5 m/s maximum, puis une tendance vers 0). Cette phase correspond à une transmission de puissance ou de couple.

Une autre phase « retour » où la vitesse de glissement atteint son maximum (environ 2.5 m/s) dans le sens opposé au précédent ou contre la direction de rotation du rotor. Durant cette phase, la pression descend aux alentours de 2 MPa. La durée totale d'un cycle est de 50 μs.

Tableau 3.

| Quantité | Aller | | | Retour | | |
|---|---|---|---|---|---|---|
| | Phase 1 | Phase 2 | Phase 3 | Phase 4 | Phase 5 | Phase 6 |
| P$_{moyenne}$ [MPa] | 9 | 11 | 8 | 5 | 2 | 2 |
| Vitesse glissement moyenne [m/s] | 0,37 | 0,012 | 0,064 | -0,0065 | -1 | -1,66 |
| Déplacement relatif [μm] | 3,92 | 0,106 | 0,422 | 0,001 | 10,8 | 19,3 |
| Mode du mouvement | Gliss. | Collage | Collage | Collage | Gliss. | Gliss. |
| Durée de la phase [μs] | 10,6 | 8,8 | 6,6 | 1,6 | 10,8 | 11,6 |
| Distance de glissement pendant. Aller et Retour d'une onde [μm] | 4,45 | | | 30,1 | | |

(suite)

| Quantité | Aller | | | Retour | | |
|---|---|---|---|---|---|---|
| | Phase 1 | Phase 2 | Phase 3 | Phase 4 | Phase 5 | Phase 6 |
| Vitesse de glissement moyenne [m/s] | 0,17 | | | -1,25 | | |
| Perte calorifique pour COF=0,30 [W/mm$^2$] | 0,11 | 0,039 | 0,15 | <0,01 | 0,6 | <1,2 |

Le tableau 3 montre un découpage d'un cycle à 20 kHz de 50 μs en plusieurs périodes de fonctionnement que l'on appelle « phases ». Ce découpage a été effectué pour un moteur d'une puissance mécanique de 5 kW.

Le découpage d'un cycle selon le tableau 3 montre deux modes de contact pour le déplacement des micro-aspérités à la surface des matériaux.

Premièrement, le contact peut s'effectuer selon une déflexion élastique des aspérités, dénommée ici « collage » (ou « stick » selon la terminologie anglo-saxonne généralement utilisée par l'homme du métier).

Deuxièmement, le contact peut s'effectuer selon un glissement total (ou « sliding » ou « slip » selon la terminologie anglo-saxonne généralement utilisée par l'homme du métier).

Pour des déplacements inférieurs à 0,42 μm, les micro-aspérités collent et ne glissent pas. Elles sont résistantes à la fatigue, puisqu'elles sont sollicitées élastiquement. Dans ce cas de réponse élastique des micro-aspérités sans glissement, ou dans le mode de collage, l'énergie frictionnelle dissipée est nulle. Les quelques pertes se situent au niveau des petites pertes anélastiques de déformation des micro-aspérités.

Le retour de la masselotte pendant la deuxième phase du cycle s'effectue avec des densités calorifiques de l'ordre de 1 W/mm$^2$, tout en restant inférieures à cette valeur, sous des vitesses de glissement de l'ordre de 1,7 m/s, tout en restant inférieures à cette valeur.

Dans ces conditions, le choix des matériaux est limité aux polymères résistants aux hautes températures, à certains aciers, aux matériaux cémentés et aux céramiques, les mêmes propriétés pouvant être requises pour les revêtements. Il faut que le matériau ou les revêtements présentent des taux d'usure faibles pour de telles sollicitations.

Pour bien solliciter les micro-aspérités élastiquement, et ce sans rupture du contact, ce comportement étant typique des états de surfaces « polies », le rayon de courbure des micro-aspérités doit être « grand ». Un tel rayon de courbure est obtenu par usinage.

Sous des grandes vitesses de glissement (de l'ordre de 1,66 m/s), le tribosystème va « s'autoroder ». Il présentera un état de surface avec une rugosité d'opération particulière. Les rayons de courbure des aspérités ont des valeurs déterminées par la vitesse. Ainsi, l'usinage permet d'obtenir une topographie prédéterminée par des essais sur moteurs.

Les développements qui précèdent s'appliquent donc au mode de contact collage combiné avec une vitesse de glissement de l'ordre d'environ 1,25 m/s.

La détermination des valeurs de topographie des surfaces frottantes après les essais dans un moteur réel représente la seule méthode pour réduire le taux d'usure initial. Ainsi, si les aspérités sont sollicitées élastiquement, la topographie reste invariante dans le temps.

CAS PARTICULIER DE MOTEUR HAUTE PUISSANCE.

Les développements qui suivent s'appliquent avantageusement à des cas de moteurs hautes puissances produisant des quantités de chaleur de 220.000 Joules pendant un actionnement d'un moteur haute puissance de 5 kW.

On résume dans les développements qui suivent l'ensemble des caractéristiques que doivent présenter les matériaux de friction.

PROPRIETES TRIBOLOGIQUES.

Les matériaux ou les revêtements doivent présenter un coefficient de frottement statique et dynamique entre 0,2 et 0,8, notamment ils peuvent avoir une valeur de préférence entre 0,5 et 0,8.

De plus, ils doivent présenter des taux d'usure $k_V$ supérieurs à $1 \cdot 10^{-8}$ mm$^3$/Nm pour une quantité de chaleur Q égale à 220.000 Joules avec 2.000 heures de vie accumulée.

Ainsi ces valeurs sont :

- invariantes avec l'humidité relative ;
- invariantes à la température, et ce jusqu'à 200°C ; et
- invariantes à des pressions de contact nominale P inférieures à 12 MPa.

Les valeurs de COF et de taux d'usure ne doivent jamais être inférieures aux valeurs minimales en fonction de la température, de la pression et de l'humidité relative.

De plus, les couples ne doivent pas présenter de mécanismes d'usures d'adhésion.

En outre, les COF statiques sont supérieurs aux COF dynamiques.

PROPRIETES MECANIQUES.

Les matériaux ou les revêtements doivent présenter une résistance à la fatigue, et ce jusqu'à $1,4 \cdot 10^{11}$ cycles pour 2.000 heures accumulées.

Les matériaux ou les revêtements doivent présenter une résistance au cisaillement à l'interface des revêtements qui a une valeur supérieure à 12 MPa.

Malheureusement, des résultats d'essais contre la fatigue au-dessus de $10^9$ alternances et à 20 kHz sont rares ou inexistants.

PROPRIETES CALORIFIQUES.

Les premiers points traités ci-après caractérisent le fait que l'on souhaite limiter la température de la masselotte ou du rotor.

Cas de la masselotte (masse constante)

Elle doit présenter une capacité thermique massique $Cp^{22C}$ supérieure à 0,35 [J/g/K] et de préférence supérieure ou égale à 0.5 [J/g/K].

Alternativement, de préférence, pour une augmentation de la température de $\Delta T= 150K$, elle doit présenter une capacité thermique massique $Cp^{22C}$ supérieure à 52,5 [J/g]. Ces valeurs sont dérivées du tableau 1.

Il est à noter que dans un futur relativement proche, une évolution des matériaux actifs, notamment piézo-électriques permettra sans doute des températures de Curie plus élevées.

Cas du rotor (volume constant)

Si le rotor est conçu pour pouvoir accumuler le maximum de chaleur, alors il doit présenter une capacité calorifique supérieure à 2 [J/cm$^3$/K] soit 400 [J/cm$^3$] pour $\Delta T= 200K$. De préférence, elle sera supérieure ou égale à 2.5 [J/cm$^3$/K], soit 500 [J/cm$^3$] pour $\Delta T= 200K$.

Les conditions précédentes sur les masselottes et les rotors sont alternatives. Elles peuvent également préférentiellement être cumulatives, les masselottes, les rotors vérifiant alors une des conditions précédentes respectivement.

Si par contre le rotor est conçu pour minimiser son poids, alors le rapport capacité calorifique/poids du rotor doit être supérieur à 70 [J/g] pour une augmentation de température de $\Delta T=200$ K.

Le point suivant caractérise le fait que l'on souhaite une capacité d'accumulation de la chaleur maximale par la masselotte.

Rapport des diffusivités.

La chaleur frictionnelle dissipée dans l'ensemble des masselottes ne doit pas excéder la capacité calorifique des masselottes $Q_{masselottes}$ pour $\Delta T=150$ K en respectant l'équation (2).

Le dernier point caractérise le fait que l'on souhaite minimiser la température de la masselotte.

Rapport de répartition des flux de chaleur.

La température de la masselotte est minimisée par une maximisation du rapport de la répartition du flux de chaleur vers le rotor, cette répartition étant conforme à l'équation (1).

RESISTANCE A LA CORROSION.

Tous les matériaux et couches de revêtements doivent être résistants à long terme, ou insensibles à la corrosion et à l'humidité. Ils peuvent de plus présenter des propriétés de passivation.

Puisque le moteur est étanche, l'eau, ainsi que les liquides de dégivrage ou antigel routiers comme le chlorure de calcium, le chlorure de sodium, les monoglycols et l'urée ne sont pas considérés.

EXEMPLE DE MODE DE REALISATION PARTICULIER.

Les matériaux de friction possibles font partie des céramiques, des matériaux cémentés sous formes monolithiques ou des revêtements déposés sur des supports en aciers, en fontes grises, en alliages d'aluminium et de titane.

Les propriétés tribologiques et la résistance à la corrosion du spectre de matériaux présentés révèlent que les matériaux céramiques et cémentés, ou les revêtements composés de ces matériaux, satisfont aux exigences d'un moteur haute puissance.

Par contre, avec l'augmentation des pertes calorifiques à dissiper pendant un actionnement maximal de 220 kJ, ainsi qu'avec une vie accumulée d'environ 2.000 heures, le comportement fonctionnel dépend en premier lieu des propriétés thermo-physiques.

Ainsi, les propriétés importantes sont notamment la capacité à emmagasiner les pertes calorifiques, ainsi que la répartition du flux de chaleur entre masselottes et rotors, et cela en fonction des diffusivités des matériaux frictionnels.

Dans ce cas, certains matériaux ne peuvent pas être utilisés pour la masselotte, parce qu'ils guideront le flux de chaleur vers la masselotte.

Les aspects de sécurité mécanique sont importants du côté du rotor. Les valeurs de la résistance à la rupture, surtout celles à chaud, des matériaux cémentés et alliages en titane plaident en faveur de ces matériaux.

La répartition des surfaces frottantes entre les masselottes et les rotors est d'environ 1 :2,96. Par conséquent, on peut envisager de d'utiliser les mêmes matériaux et revêtements pour les rotors (deuxième corps) et les masselottes (premier corps).

Les couches (dures) déposées par projection thermique doivent être usinées vers des rugosités finales de $R_a$ (rugosité arithmétique) inférieures à 0,04 $\mu$m. Cette rugosité permet d'éliminer une action abrasive et de minimiser l'auto-rodage (ou « running-in » selon la terminologie anglo-saxonne généralement utilisée). De préférence, puisque les revêtements présentent une porosité comprise entre 1 % en volume et 4 % en volume, les valeurs des rugosités $R_{pK}$ et $R_{vK}$ (définies selon la norme DIN EN ISO 13565-2:1998) doivent être inférieures à 0,030 $\mu$m et 0,070 $\mu$m respectivement. L'épaisseurs des couches usinées (épaisseur fonctionnel) déposées par projection thermique est supérieure à 50 $\mu$m, et de préférence supérieure à 200 $\mu$m.

Tableau 4

| Matériaux pour masselottes et rotors | | |
|---|---|---|
| Supports/Substrats | | Revêtements en projection thermique |
| (Ti,Mo)(C,N) + 8-20 % NiMo (nuances TM 8,10,20) | | Non revêtu |
| WC-6Ni | | Non revêtu |
| MgO-ZrO$_2$ (masselotte) | | Non revêtu |
| HIP-AIN ou GPS- AIN (masselotte) | | Non revêtu |
| Fontes grises globulaire | Et trempe bainitique et/ou alliées par Cr, Mo, Al, V, Ti | -Phases Magnéli (Ti$_n$O$_{2n-1}$, $4 \leq n \leq 10$, avec n entier ou mélanges tels que 40%Ti$_4$O$_7$/ 60%Ti$_5$O$_9$) -WC-17%Co -(Ti,Mo)(C,N) ou (Ti,W)(C,N) + Ni/Mo $\rightarrow$75Cr$_3$C$_2$/<25NiCr -4-6Al$_2$O$_3$/6-4TiO$_2$ |
| Fontes grises lamellaire | | |
| Aciers (Z6CND16-05-01) | | |
| Aciers X5CrNiCu15-5 | | |
| Alliages AlSi + SiC/Al$_2$O$_3$ | | |
| Alliages AlSi+dispersoïdes Al$_4$C$_3$/Al$_2$O$_3$/TiB$_2$ | | |
| Alliages Al-Fe-V | | |
| Aluminiums série 6xxx en T6 et supérieure et série 7xxx | | |
| Alliages de titanium, UNS R5xxxx, tels que TiAl6V4. | | |

Le tableau 4 présente les matériaux qui conviennent pour des applications aux moteurs hautes puissances.

Dans le tableau qui précède, on remarque la présence du matériau nitrure d'aluminium par frittage à chaud ou HIP (Hot Isostatic Pressed) - AIN ou nitrure d'aluminium par frittage sous pression GPS (Gas Pressure Sintered)-AIN.

Les fontes grises de la présente invention sont hypoeutectiques entre 2,06% et <4,3% en poids de carbone, qui contiennent jusqu'à 2.5% en poids de silicium pour décomposer le Fe$_3$C.

Les fontes alliées peuvent contenir jusqu'à 0-5% de Chrome, et/ou 0-6% de Vanadium, et/ou 0-5% de Manganèse, et/ou 0-4% de Molybdène, et/ou 0-2% de Titane et/ou 0-5% d'Aluminium, ainsi que et/ou 0-5% de Phosphore.

Les alliages de la série 7xxx contiennent comme élément d'alliage principal entre 6% et 14% en poids de Zinc et sont traités thermiquement dans le niveau de dégradation « T6 », voire supérieur.

Les alliages en AlSi contiennent jusqu'à 30% en volume de dispersoïdes, trichites ou fibres en SiC, $Al_2O_3$, $Al_4C_3$, $TiB_2$ ou $B_4C$ et des mélanges de ceux-ci.

Les alliages Al-Fe-V contiennent comme éléments d'alliages principaux jusqu'à 15 % en poids de fer et jusqu'à 10% en poids de V.

L'alumine renforcée par de la zircone ou ZTA (Zirconia Toughened Alumina) et l'alumine renforcée par de la zircone et des lamelles ou ZPTA (Zirconia and Platelet Toughened Alumina) selon les terminologies anglo-saxonne généralement utilisées par l'homme de métier sont des céramiques à matrices en alumine.

Cas du ZTA.

Dans une matrice en alumine, on peut réaliser d'une manière économique l'incorporation de 15 % en volume de zircone stabilisé par $Y_2O_3$ ou $CeO_2$, Le diamètre maximal possible de la zircone est inférieur à 0,7 $\mu$m. Les matériaux en « Zirconia Toughened Alumina » (ZTA) contiennent typiquement 11 vol.-% $Y_2O_3$-$ZrO_2$ dans 89 vol.-% $Al_2O_3$.

Cas du ZPTA.

Avec l'addition de SrO (de préférence 0,8 % en poids) dans le système $Al_2O_3$-$ZrO_2(Y_2O_3)$ on peur réaliser des précipitations de $SrAl_{12}O_{19}$. Ces trichites ont une longueur d'environ 3 $\mu$m avec une épaisseur d'environ 0,3 $\mu$m. L'addition des trichites augmente la ténacité $K_{IC}$ jusqu'à 16 MPa√m.

Pour maîtriser la perte en dureté causée par l'addition du SrO, l'oxyde de chrome $Cr_2O_3$ forme une phase $SrEl_{12-x} Cr_xO_{19}$ en se diluant dans le cristal de l'alumine. Déjà une quantité de 0,3 % en poids de $Cr_2O_3$ donne une augmentation de la dureté considérable.

L'oxyde de titane présentant un défaut stoechiométrique d'oxygène (lacunes planaires). Il se présente sous plusieurs formes.

$Ti_nO_{2n-1}$, avec $4 \leq n \leq 10$, n entier

ainsi que

$Ti_nO_{2n-1}$, avec n entier $16 \leq n \leq 50$.

Ces deux matériaux s'appliquent de préférence comme revêtement par projection thermique ou sont collés sur la masselotte monolithique.

CAS DE DUREE DE FONCTIONNEMENT LONGUE.

Les cas de durée de fonctionnement longue font référence à des durées de vie accumulée de 2000 heures avec des chaleurs de 220.000 Joules.

Dans ces cas, le nombre de matériaux et revêtements utilisables est réduit, notamment à cause des sollicitations calorifiques élevées.

Par exemple, le carbone-carbone (CfC), les alliages en titane et le WC-6Ni possèdent une capacité d'accumulation calorifique insuffisante pour emmagasiner les pertes frictionnelles (voir tableaux 1, 2 et 7).

Le tableau 5 montre des exemples de matériaux utilisables dans le tribosystème avec des chaleurs de 220.000 Joules et une durée de vie de 2.000 heures.

Tableau 5.

| Matériaux pour rotors | |
|---|---|
| Supports/Substrats pour rotors | Revêtements en projection thermique |
| (Ti,Mo)(C,N) + 8-20 % Ni/Mo (nuances TM 8,10,20) | Non-revêtu |

(suite)

| Matériaux pour rotors | | |
|---|---|---|
| Fontes grises globulaire | Et trempe bainitique et/ou alliées par Cr, Mo, Al, V, Ti, P, Mn | -Phases Magnéli ($Ti_nO_{2n-1}$, $4 \leq n \leq 10$, avec n entier, ou mélanges tels que $40\%Ti_4O_7/60\%Ti_5O_9$) -WC-17%Co -(Ti,Mo)(C,N) ou (Ti,W)(C,N) + Ni/Mo $\rightarrow 75Cr_3C_2/<25NiCr$ -4-6$Al_2O_3$/4-6$TiO_2$ |
| Fontes grises lamellaire | | |
| Aciers (Z6CND16-05-01) | | |
| Aciers X5CrNiCu15-5 | | |
| Alliages AlSi + SiC/$Al_2O_3$ | | |
| Alliages AlSi + dispersoïdes : $Al_4C_3$/$Al_2O_3$/$TiB_2$ | | |
| Alliages Al-Fe-V | | |
| Aluminiums série 6xxx en T6 et supérieure et série 7xxx | | |

Les revêtements déposés sur la masselotte en projection thermique tels que
WC-17%Co, (Ti,Mo)(C,N) ou
(Ti,W)(C,N) + Ni/Mo et >75$Cr_3C_2$/<25NiCr
ont une très bonne résistance à l'usure et présentent une conductivité thermique élevée. La conductivité thermique élevée augmentera ou guidera le flux de chaleur frictionnelle vers les masselottes. Ceci représente un risque pour la masselotte et les céramiques actives, notamment piézo-électriques. Ainsi, ces matériaux s'appliqueront de préférence sur les rotors.

CAS D'ALLEGEMENT.

Par exemple, pour une conception prévoyant deux rotors en acier Z6CND16-05-01, on rappelle que ces deux rotors ont une masse d'environ 1,94 kg.
Les possibilités d'allègement sont les suivantes.
On peut premièrement effectuer une réduction du poids absolu.
La réduction du poids absolu des rotors peu être réalisée dans le cas d'un niveau de chaleur généré bas. Dans cette stratégie seront favorisés les alliages en aluminium avec revêtement, qui réduisent le poids des rotors vers 680 à 730 grammes.
On peut également chercher à effectuer une maximisation de la capacité d'accumulation de chaleur. Cette dernière possibilité est résumée dans le tableau 7.
La maximisation de la capacité massique d'accumulation de chaleur du rotor favorise les fontes grise revêtues, l'acier Z6CND16-05-01 revêtu, le SiSiC revêtu, les nuances TM 8,10,20 non revêtues et les nuances WC-6Ni en grains gros, fins ou ultra fins non revêtues.
Si l'optimisation du poids reste quand même un sujet important dans le cas d'un fort niveau de chaleur générée, l'emploi des fontes grises (alliées et/ou trempes bainitiques) revêtues, les nuances TMxx non revêtues et l'acier Z6CND16-05-01 reste acceptable.
Le tableau 6 représente les matériaux utilisables pour des applications frictionnelles dans le tribosystème masselotte/rotor pour une énergie dissipée par le moteur dans un actionnement avec 220.000 Joules et une durée de vie de 2.000 heures.

Tableau 6.

| Matériaux pour masselottes | |
|---|---|
| Supports/Substrats pour masselottes | Revêtements en projection thermique |
| Zirconia toughened Alumina (ZTA, ZPTA) | Non revêtu |
| ($Ti_nO_{2n-1}$, $4 \leq n \leq 10$, avec n entier, ou mélanges du type $40\%Ti_4O_7/60\%Ti_5O_9$) | Non revêtu |
| AIN par frittage à chaud (HIP-AIN) | Non revêtu |
| AIN par frittage sous pression GPS-AIN | Non revêtu |
| SiSiC (pour certaines applications faible chaleur) | Non revêtu |
| MgO-$ZrO_2$ | Non revêtu |

(suite)

| (Ti,Mo)(C,N) + 8-20 % Ni/Mo (nuances TM 8,10,20) | | Non revêtu |
|---|---|---|
| Aciers X5CrNiCu15-5 | | -Phases Magnéli ($Ti_nO_{2n-1}$, $4 \leq n \leq 10$, ou mélanges tels que 40% $Ti_4O_7$/60%$Ti_5O_9$) -4-6$Al_2O_3$/6-4$TiO_2$ [-WC-17%Co -(Ti,Mo)(C,N) ou (Ti,W)(C,N) + Ni/Mo $\rightarrow$75$Cr_3C_2$/<25NiCr] |
| Fontes grises globulaires | Et trempe bainitique et/ou alliées par Cr, Mo, Al, V, Ti, P, Mn | |
| Fontes grises lamellaires | | |
| Aciers (Z6CND16-05-01) | | |
| SiSiC | | |

Dans le tableau 6, les matériaux au-dessus de la ligne épaisse sont des matériaux monolithiques.

Les matériaux en dessous sont des matériaux nécessitant un revêtement.

Des rotors en MgO- ou $Y_2O_3$-$ZrO_2$ et les $Ti_nO_{2n-1}$ avec n entier (qui ont une conductivité thermique inférieure à 4W/mK) vont surtout guider le flux de chaleur vers chaque rotor.

La résistance à la rupture des $Ti_nO_{2n-1}$ est trop faible pour qu'ils soient appliqués aux rotors.

Les nuances des SiSiC avec 8-18% Si en poids et revêtues représenteront un matériaux optimal pour le rotor, et pour la masselotte lorsqu'elles sont revêtues par un revêtement à conductivité thermique faible.

Pour certaines applications faible chaleur, le SiSiC peut être utilisé pour les rotors et/ou les masselottes sans revêtement.

On a représenté dans le tableau 7 une comparaison des capacités calorifiques et le poids des matériaux monolithiques pour rotors de 125,8 $cm^3$ (diamètre égal à 179 mm x 5 mm) et pour $\Delta$T=200 K

Tableau 7.

| Matériaux | Poids des 2 rotors [kg] | Capacité calorifique des 2 rotors [kJ] | Rapport Calorifique/ Poids [kJ/kg] |
|---|---|---|---|
| $C_{fibre}$-$C_{matrice}$ | 0,452 | 56,2 | 124 |
| TiAl6V4 | 1,156 | 120,1 | 103 |
| Aluminium 6xxx | 0,679 | 121,0 | 178 |
| AlN | 0,830 | 133,0 | 160 |
| AlSi + SiC/$Al_2O_3$ | 0,729 | 131,3 | 179 |
| $Si_3N_4$ | 0,805 | 128,9 | 160 |
| (Ti,Mo)(C,N) | 1,635 | 150,1 | 92 |
| Z6CND16-05-01 | 1,937 | 166,3 | 86 |
| SiSiC | 0,779 | 171,4 | 219 |
| WC-6Ni | 3,748 | 187,4 | 50 |
| Fontes grises FGL | 1,811 | 188,6 | 103 |
| MgO-$ZrO_2$ | 1,434 | 196,4 | 137 |
| Fontes grises FGS | 1,811 | 223,9 | 124 |
| $Ti_nO_{2n-1}$ | 1,313 | 221,1 | 168 |

Il est à noter cependant que le WC-6Ni est trop lourd pour constituer le matériau du rotor qui doit être relativement léger dans le cas d'un moteur haute puissance.

**Revendications**

1. Système, notamment adapté pour les moteurs hautes puissances, comportant au moins un rotor (1a ; 1b) et des moyens (4a, 4b ; 5a, 5b) comportant des éléments actifs (7, 8) aptes à mettre en rotation le/les rotor(s) (1a ;1b) par leur déformation synchronisée, lesdits moyens de mise en rotation du/des rotor(s) comportant au moins un pétale (6) comportant une masselotte (11), **caractérisé en ce que** le matériau de chaque masselotte (11) est tel qu'elle présente une capacité thermique massique $Cp^{22C}$ supérieure à 0,35 [J/g/K], et/ou le matériau de chaque rotor (1a ; 1 b) est tel qu'il présente une capacité calorifique supérieure à 2 [J/cm$^3$/K].

2. Système selon la revendication 1, **caractérisé en ce que** chaque masselotte (11) présente une capacité thermique massique supérieure à 0.5 [J/g/K].

3. Système selon l'une des revendications 1 ou 2, **caractérisé en ce que** la capacité calorifique de chaque rotor (1a ; 1b) est supérieure à 2.5 [J/cm$^3$/K].

4. Système selon l'une des revendications 1 à 3, **caractérisé en ce que** le matériau de chaque masselotte (11) et de chaque rotor (1a; 1b), ce matériau étant non revêtu, comporte :

   - du (Ti,Mo)(C,N) + 8-20 % de liant Ni/Mo ; et/ou
   - du WC-6Ni ; et/ou
   - de l'alumine renforcée par de la zircone; et/ou
   - du AlN ; et/ou
   - du carbure de silicium infiltré au silicium SiSiC, avec 8-20% en poids de silicium.

5. Système selon l'une des revendications 1 à 4, **caractérisé en ce que** le matériau de chaque masselotte (11) comporte :

   - du $MgO-ZrO_2$ ; et/ou
   - de l'alumine renforcée par de la zircone; et/ou
   - du nitrure d'aluminium par frittage à chaud; et/ou
   - du nitrure d'aluminium par frittage sous pression; et/ou-
   - une phase Magnéli sous forme de $Ti_nO_{2n-1}$, où $4 \leq n \leq 10$, avec n entier, ou sous forme de mélange du type $40\%Ti_4O_7/60\%Ti_5O_9$.

6. Système selon l'une des revendications 1 à 3, **caractérisé en ce que** le matériau de chaque masselotte (11) et de chaque rotor (1a ; 1b) est revêtu en projection thermique par un matériau qui comporte :

   - une phase Magnéli sous forme de $Ti_nO_{2n-1}$, où $4 \leq n \leq 10$, avec n entier, ou sous forme de mélange du type $40\%Ti_4O_7/60\%Ti_5O_9$) ; et/ou
   - du WC-17%Co ; et/ou
   - du (Ti,Mo)(C,N) ou (Ti,W)(C,N) + un liant Ni/Mo ; et/ou
   - du $>75Cr_3C_2/<25NiCr$ ; et/ou
   - du $4-6Al_2O_3/6-4TiO_2$.

7. Système selon la revendication 6, **caractérisé en ce que** le matériau de chaque masselotte (11) et de chaque rotor (1a ; 1 b) comporte :

   - des fontes grises globulaires et/ou des fontes grises lamellaires avec une trempe bainitique et/ou alliées par Cr, Mo, Al, V, Ti ; et/ou
   - des aciers du type Z6CND16-05-01 ; et/ou
   - des aciers du type X5CrNiCu15-5 ; et/ou
   - des alliages AlSi + $SiC/Al_2O_3$; et/ou
   - des alliages AlSi + des dispersoïdes $Al_4C_3/Al_2O_3/TiB_2$; et/ou
   - des alliages Al-Fe-V ; et/ou
   - des aluminiums de série 6xxx, en T6 et plus, ou de série 7xxx ; et/ou
   - du carbure de silicium infiltré au silicium SiSiC ; et/ou
   - des alliages de titanium de type UNS R5xxxx.

8. Système selon la revendication 6, **caractérisé en ce que** le matériau de revêtement projeté par projection thermique forme des couches dures qui sont usinées vers des valeurs de rugosités arithmétiques finales inférieures à 0,04 $\mu$m, l'épaisseur des couches usinées étant supérieures à 50 $\mu$m.

9. Système selon la revendication 6, **caractérisé en ce que** le matériau de revêtement projeté par projection thermique forme des couches dures qui sont usinées vers des valeurs de rugosités $R_{pK}$ et $R_{vK}$ définies dans la norme DIN EN ISO 13565-2:1998, qui sont inférieures à 0,030 $\mu$m et 0,070 $\mu$m respectivement.

**Claims**

1. System, suitable in particular for high-power motors, comprising at least one rotor (1a; 1b) and means (4a, 4b; 5a, 5b) comprising active components (7, 8) capable of rotating the rotor(s) (1a; 1b) by the synchronized deformation thereof, said rotating means of the rotor(s) comprising at least one lobe (6) comprising a counter weight (11), **characterised in that** the material of each counter weight (11) is such that it has a specific heat capacity $Cp^{22C}$ greater than 0.35 [J/g/K], and/or the material of each rotor (1a; 1b) is such that it has a heat capacity greater than 2 [J/cm$^3$/K].

2. System of claim 1, **characterised in that** each counter weight (11) has a specific heat capacity greater than 0.5 [J/g/K].

3. System as claimed in claims 1 or 2, **characterised in that** the heat capacity of each rotor (1a; 1b) is greater than 2.5 [J/cm$^3$/K].

4. System as claimed in one of claims 1 to 3, **characterised in that** the material of each counter weight (11) and of each rotor (1a; 1b), this material being uncoated, comprises:

   - (Ti, Mo) (C,N)+ 8-20% of an Ni/Mo binder; and/or
   - WC-6-Ni; and/or
   - zirconia-reinforced aluminium; and/or
   - AlN; and/or
   - silicon-infiltrated silicon carbide SiSiC, with 8-20% by weight of silicon.

5. System as claimed in one of claims 1 to 4, **characterised in that** the material of each counter weight (11) comprises:

   - $MgO$-$ZrO_2$; and/or
   - zirconia-reinforced aluminium; and/or
   - heat-sintered aluminium nitride; and/or
   - pressure-sintered aluminium nitride; and/or
   - a $Ti_nO_{2n-1}$ Magneli phase, wherein $4 \leq n \leq 10$, with n being an integer, or a 40% $Ti_nO_7$ / 60% $Ti_5O_g$ type mixture.

6. System as claimed in one of claims 1 to 3, **characterised in that** the material of each counter weight (11) and of each rotor (1a; 1b) is hot-spray coated with a material comprising:

   - a $Ti_nO_{2n-1}$ Magneli phase, wherein $4 \leq n \leq 10$, with n being an integer, or a 40% $Ti_nO_7$ / 60% $Ti_5O_g$ type mixture; and/or
   - WC - 17% Co; and/or
   - (Ti, Mo)(C,N) or (Ti, W) (C, N) + an Ni/Mo binder; and/or
   - >75 $Cr_3C_2$ /<25 NiCr; and/or
   - 4-6 $Al_2O_3$ / 6-4 $TiO_2$.

7. System of claim 6, **characterised in that** the material of each counter weight (11) and of each rotor (1a; 1b) comprises:

   - steels of the Z6CND16-05-01 type; and/or
   - steels of the X5CrNiCu15-5 type; and/or
   - AlSi + SiC/$Al_2O_3$ alloys; and/or
   - AlSi + $Al_4C_4$/$Al_2O_3$/$TiB_2$ dispersoid alloys; and/or
   - Al-Fe-V alloys; and/or
   - aluminiums of the 6xxx series in T-6 and higher, or of the 7xxx series; and/or
   - silicon-infiltrated silicon carbide SiSiC; and/or
   - UNS R5xxx titanium alloys.

8. System of claim 6, **characterised in that** the hot-sprayed coating material forms hard layers which are machined to arithmetic roughness final values lower than 0.04 $\mu$m, the thickness of the machined layers being greater than 50 $\mu$m.

9. System of claim 6, **characterised in that** the hot-sprayed coating material forms hard layers which are machined to roughness values $R_{pK}$ and $R_{vK}$ defined in the standard DIN EN ISO 13565-2: 1998, which are lower than 0.030 $\mu$m and 0.070 $\mu$m, respectively.

**Patentansprüche**

1. System, das insbesondere für Hochleistungsmotoren angepasst ist, umfassend zumindest einen Rotor (1a; 1b) sowie Mittel (4a, 4b; 5a, 5b), die aktive Elemente (7, 8) umfassen, die imstande sind, den/die Rotor/en (1a; 1b) durch ihre synchrone Verformung in Rotation zu versetzen, wobei besagte Mittel zum Versetzen des/der Rotors/ Rotoren in Rotation zumindest ein Blatt (6) umfasst, das ein Ausgleichsgewicht (11) umfasst, **dadurch gekennzeichnet, dass** das Material jedes Ausgleichsgewichtes (11) ein Derartiges ist, dass es eine spezifische Wärmekapazität $Cp^{22C}$ von mehr als 0,35 [J/g/K] aufweist, und/oder dass das Material jedes Rotors (1a; 1b) ein Derartiges ist, dass es einen Wärmeinhalt von mehr als 2 [J/cm$^3$/K] aufweist.

2. System nach Anspruch 1, **dadurch gekennzeichnet, dass** jedes Ausgleichsgewicht (11) eine spezifische Wärmekapazität von mehr als 0,5 [J/g/K] aufweist.

3. System nach einem der Ansprüche 1 oder 2, **dadurch gekennzeichnet, dass** der Wärmeinhalt jedes Rotors (1a; 1b) mehr als 2,5 [J/cm$^3$/K] beträgt.

4. System nach einem der Ansprüche 1 bis 3, **dadurch gekennzeichnet, dass** das Material jedes Ausgleichsgewichtes (11) und jedes Rotors (1a; 1b) Folgendes umfasst, wobei dieses Material nicht beschichtet ist:

   - (Ti, Mo)(C, N) + 8-20% Ni/Mo-Bindemittel; und/oder
   - WC-6Ni; und/oder
   - zirkoniumverstärktes Aluminiumoxid; und/oder
   - AIN; und/oder
   - siliciuminfiltriertes Siliciumcarbid SiSiC mit 8-20% des Gewichts an Silicium.

5. System nach einem der Ansprüche 1 bis 4, **dadurch gekennzeichnet, dass** das Material jedes Ausgleichsgewichtes (11) Folgendes umfasst:

   - MgO-ZrO$_2$; und/oder
   - zirkoniumverstärktes Aluminiumoxid; und/oder
   - warmgesintertes Aluminiumnitrid; und/oder
   - druckgesintertes Aluminiumnitrid; und/oder
   - eine Magneli-Phase in Form von Ti$_n$O$_{2n-1}$ mit 4 $\leq$ n $\leq$ 10 und n als ganze Zahl, oder in Form einer Mischung des Typs 40% Ti$_4$O$_7$/60% Ti$_5$O$_9$.

6. System nach einem der Ansprüche 1 bis 3, **dadurch gekennzeichnet, dass** das Material jedes Ausgleichsgewichtes (11) und jedes Rotors (1a; 1b) durch thermisches Spritzen mit einem Material beschichtet wird, das Folgendes umfasst:

   - eine Magneli-Phase in Form von Ti$_n$O$_{2n-1}$ mit 4 $\leq$ n $\leq$ 10 und n als ganze Zahl, oder in Form einer Mischung des Typs 40% Ti$_4$O$_7$/60% Ti$_5$O$_9$; und/oder
   - WC-17% Co; und/oder
   - (Ti, Mo)(C, N) oder (Ti, W)(C, N) + ein Ni/Mo-Bindemittel; und/oder
   - > 75Cr$_3$C$_2$/<25NiCr; und/oder
   - 4-6Al$_2$O$_3$/6-4TiO$_2$.

7. System nach Anspruch 6, **dadurch gekennzeichnet, dass** das Material jedes Ausgleichsgewichtes (11) und jedes Rotors (1a; 1b) Folgendes umfasst:

   - Sphäroguss und/oder Lamellenguss mit Zwischenstufenumwandlung und/oder legiert mit Cr, Mo, Al, V, Ti;

und/oder

- Stähle des Typs Z6CND16-05-01; und/oder
- Stähle des Typs X5CrNiCu15-5; und/oder
- AlSi Legierungen + SiC/Al$_2$O$_3$; und/oder
- AlSi Legierungen + Dispersoide Al$_4$C$_3$/Al$_2$O$_3$/TiB$_2$; und/oder
- Al-Fe-V Legierungen; und/oder
- Aluminium der Serie 6xxx, T6 und höher, oder der Serie 7xxx; und/oder
- siliciuminfiltriertes Siliciumcarbid SiSiC; und/oder
- Titanlegierungen des Typs UNS R5xxxx.

8. System nach Anspruch 6, **dadurch gekennzeichnet, dass** das Beschichtungsmaterial, das durch thermisches Spritzen aufgespritzt wird, harte Schichten bildet, die bearbeitet werden bis endgültige, arithmetische Rauheitswerte von weniger als 0,04$\mu$ m erreicht sind, wobei die Dicke der bearbeiteten Schichten mehr als 50$\mu$ m beträgt.

9. System nach Anspruch 6, **dadurch gekennzeichnet, dass** das Beschichtungsmaterial, das durch thermisches Spritzen aufgespritzt wird, harte Schichten bildet, die bearbeitet werden bis die Rauheitswerte R$_{pK}$ und R$_{vK}$ erreicht sind, die in der Norm DIN EN ISO 13565-2:1998 definiert und jeweils niedriger als 0,030$\mu$ m und 0,070$\mu$ m sind.

FIG.1

FIG.2

FIG.3

FIG.4

**EP 1 411 625 B1**

**RÉFÉRENCES CITÉES DANS LA DESCRIPTION**

**Documents brevets cités dans la description**

- FR 2806225
- FR 2819650